# EUROPEAN PATENT APPLICATION

(11) **EP 3 979 711 A1**
(43) Date of publication of application: **06.04.2022**
(21) Application number: 20199869.7
(22) Date of filing: 02.10.2020
(51) Int. Cl.: H04W 48/06, H04W 60/00, H04W 76/18, H04W 88/06, H04W 28/02

(54) **COMMUNICATION NETWORK ARRANGEMENT, MOBILE TERMINAL, METHOD FOR MANAGING MOBILE COMMUNICATION NETWORK ACCESS AND METHOD FOR ACCESSING A MOBILE COMMUNICATION NETWORK**

(71) Applicant: NTT DoCoMo, Inc., Tokyo 100-6150 (JP)
(72) Inventor: THAKOLSRI, Srisakul, 80687 Munich (DE); SAMA, Malla Reddy, 80687 Munich (DE)
(74) Representative: Viering, Jentschura & Partner mbB Patent- und Rechtsanwälte

(57) **Abstract**

According to one embodiment, a communication network arrangement is described comprising a receiver configured to receive a request to register a mobile terminal in a first mobile communication network or to provide a communication session to the mobile terminal via the first mobile communication network; a quota monitoring component configured to determine whether registering the mobile terminal in the first mobile communication network or providing a communication session to the mobile terminal via the first mobile communication network according to the request violates a quota; and an access management component configured to reject the request if registering the mobile terminal in the first mobile communication network or providing a communication session to the mobile terminal via the first mobile communication network according to the request violates the quota and provide information to the mobile terminal about whether the mobile terminal may register with a second mobile communication network or the second mobile communication network may provide a communication session to the mobile terminal according to the request.

## Description

The present disclosure relates to communication network arrangements, mobile terminals, methods for managing mobile communication network access and methods for accessing a mobile communication network.

In a communication network such as a 4G or 5G mobile communication network it may be desirable to introduce limitations or quota with respect to the number of mobile terminals registered, e.g. for a certain network slice, or the number of sessions established, e.g. by means of a certain network slice. This may for example be used to prevent overload and thus to ensure a certain performance of the communication network. Corresponding approaches which allow enforcing such quota are desirable, in particular in case of mobile terminal mobility between a 4G mobile communication network and a 5G mobile communication network (i.e. 4G/5G interworking).

According to one embodiment, a communication network arrangement is provided comprising a receiver configured to receive a request to register a mobile terminal in a first mobile communication network or to provide a communication session to the mobile terminal via the first mobile communication network; a quota monitoring component configured to determine whether registering the mobile terminal in the first mobile communication network or providing a communication session to the mobile terminal via the first mobile communication network according to the request violates a quota; and an access management component configured to reject the request if registering the mobile terminal in the first mobile communication network or providing a communication session to the mobile terminal via the first mobile communication network according to the request violates the quota and provide information to the mobile terminal about whether the mobile terminal may register with a second mobile communication network or the second mobile communication network may provide a communication session to the mobile terminal according to the request.

According to further embodiments, a method for managing mobile communication network access, a method for accessing a mobile communication network and a mobile terminal according to the above communication network arrangement are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system illustrating interworking of a 5G communication with a 4G communication system for UE mobility support between 5G and 4G.
- Figure 2: illustrates network slice support for interworking of an EPC with a 5GC.
- Figure 3: shows a flow diagram illustrating a first exemplary approach for quota enforcement based on a UE subscription information extension.
- Figure 4: shows a flow diagram illustrating another example for the first exemplary approach for quota enforcement based on an MME extension.
- Figure 5: shows a flow diagram illustrating a second exemplary approach for quota enforcement.
- Figure 6: shows a flow diagram illustrating a third exemplary approach for quota enforcement.
- Figure 7: shows a communication network arrangement according to an embodiment.
- Figure 8: shows a flow diagram illustrating a method for managing mobile communication network access.
- Figure 9: shows a mobile terminal according to an embodiment.
- Figure 10: shows a flow diagram illustrating a method for accessing a mobile communication network, e.g. carried out by a mobile terminal.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

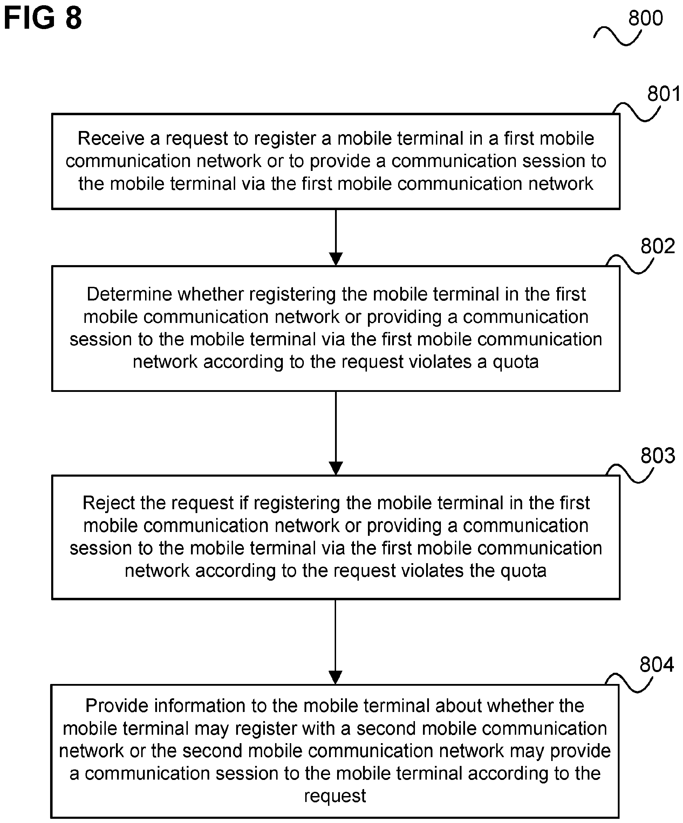

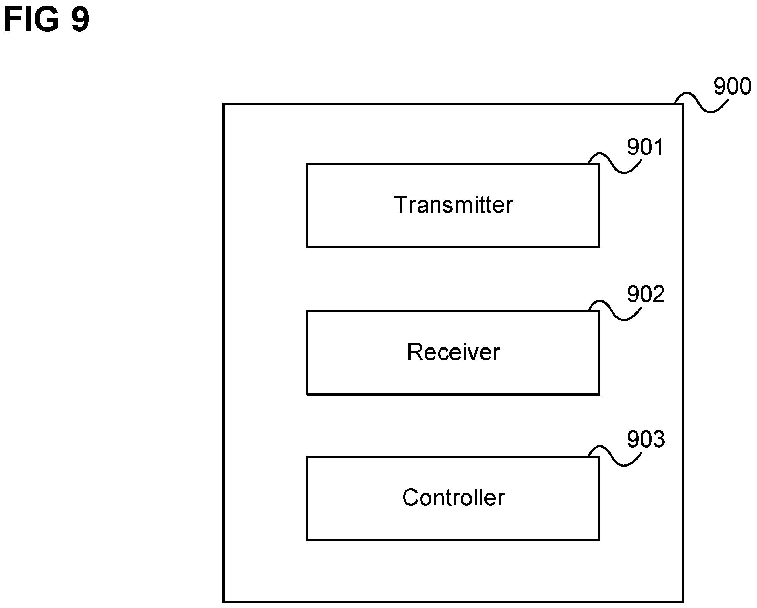

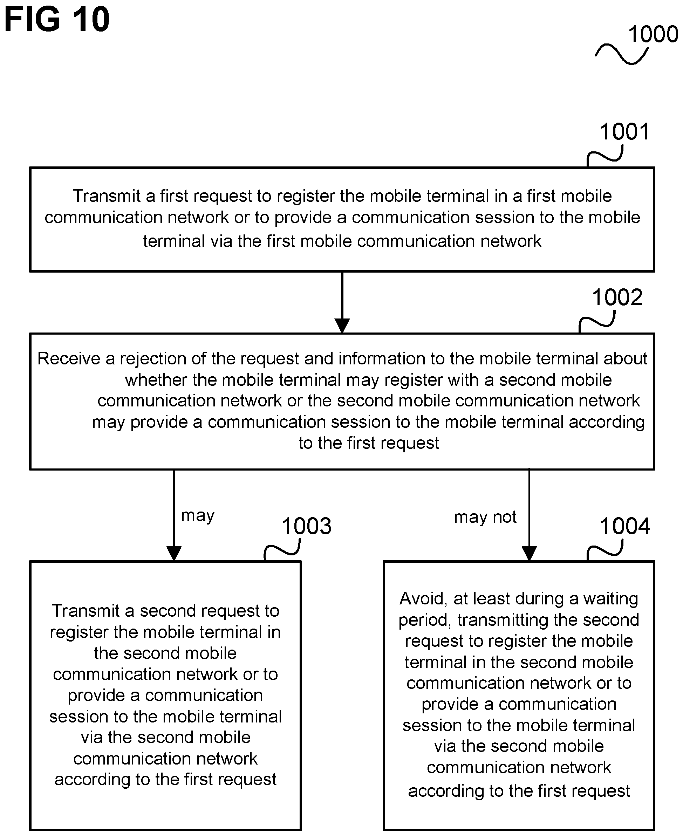

Various examples corresponding to aspects of this disclosure are described below:
Example 1 is a communication network arrangement as described with reference to figure 9.
Example 2 is the communication network arrangement according to Example 1, wherein the quota monitoring component or a further quota monitoring component of the communication arrangement is configured to determine whether registering the mobile terminal in a second mobile communication network or providing a communication session to the mobile terminal via the second mobile communication network according to the request violates the quota or a further quota.
Example 3 is the communication network arrangement according to Example 2, wherein providing the information comprises providing information about whether registering the mobile terminal in the second mobile communication network or providing a communication session to the mobile terminal via the second mobile communication network according to the request violates the quota or the further quota.
Example 4 is the communication network arrangement according to Example 2 or 3, wherein the quota or the further quota is a quota limiting the mobile terminals registered in a specific network slice of the second mobile communication network and/or the number of communication sessions provided by the specific network slice of the second mobile communication network.
Example 5 is the communication network arrangement according to any one of Examples 2 to 4, wherein the quota or the further quota is fulfilled or not fulfilled irrespective of the number of mobile terminals registered in other network slices of the second mobile communication network than the specific network slice, if it limits the number of mobile terminals registered in the specific network slice, and is fulfilled or not fulfilled irrespective of the number of communication sessions provided by other network slices of the second mobile communication network than the specific network slice, if it limits the number of communication sessions provided by the specific network slice.
Example 6 is the communication network arrangement according to any one of Examples 1 to 5, wherein the access management component is configured to provide the information irrespective of whether registering the mobile terminal in the first mobile communication network or providing a communication session to the mobile terminal via the first mobile communication network according to the request violates the quota.
Example 7 is the communication network arrangement according to any one of Examples 1 to 5, wherein the access management component is configured to provide the information to the mobile terminal only if registering the mobile terminal in the first mobile communication network or providing a communication session to the mobile terminal via the first mobile communication network according to the request violates the quota.
Example 8 is the communication network arrangement according to any one of Examples 1 to 7, wherein the quota limits the number of mobile terminals registered in the first mobile communication network or limits the number of communication sessions provided by the first mobile communication network.
Example 9 is the communication network arrangement according to any one of Examples 1 to 8, wherein the quota is a quota of the first mobile communication network which is fulfilled or not fulfilled independently from the number of mobile terminals registered in the second mobile communication network or is a quota shared between the first mobile communication network which limits the sum of the number of mobile terminals registered in the first mobile communication network and the number of mobile terminals registered in the second mobile communication network or limits the sum of the number of communication sessions provided by the first mobile communication network and the number of communication sessions provided by the second mobile communication network.
Example 10 is the communication network arrangement according to any one of Examples 1 to 9, wherein the access management component is configured to generate a message indicating that the request is rejected and including the information about whether the mobile terminal may register with a second mobile communication network or the second mobile communication network may provide a communication session to the mobile terminal according to the request and is configured to transmit the request to the mobile terminal.
Example 11 is the communication network arrangement according to any one of Examples 1 to 10, wherein the first mobile communication network is a 4G mobile communication network and the second mobile communication network is a 5G mobile communication network or vice versa.
Example 12 is the communication network arrangement according to any one of Examples 1 to 11, wherein the first mobile communication network and the second mobile communication network support mobility of mobile terminals between each other by taking into account the quota that is subject to either the first mobile communication network or the second communication network or for both the first mobile communication network and the second mobile communication network.
Example 13 is the communication network arrangement according to any one of Examples 1 to 12, wherein the quota monitoring component is configured to determine whether registering the mobile terminal in the first mobile communication network or providing a communication session to the mobile terminal via the first mobile communication network according to the request violates the quota based on an Access Point Name used by the mobile terminal.
Example 14 is the communication network arrangement according to any one of Examples 1 to 13, wherein the access management component is configured, if registering the mobile terminal in the first mobile communication network or providing a communication session to the mobile terminal via the first mobile communication network according to the request violates the quota and if the mobile terminal may not register with the second mobile communication network or the second mobile communication network may not provide a communication session to the mobile terminal according to the request, send a specification of a waiting period to the mobile terminal after which the mobile terminal may request to register in the first mobile communication network or the second mobile communication network or may request a communication session from the first mobile communication network or the second mobile communication network.
Example 15 is the communication network arrangement according to any one of Examples 1 to 13, wherein the access management component is configured, if registering the mobile terminal in the first mobile communication network or providing a communication session to the mobile terminal via the first mobile communication network according to the request violates the quota, send a specification of a waiting period to the mobile terminal after which the mobile terminal may request to register in the first mobile communication network or may request a communication session from the first mobile communication network.
Example 16 is a method for managing mobile communication network access as described with reference to figure 8.
Example 17 is the method according to Example 16, comprising determining whether registering the mobile terminal in a second mobile communication network or providing a communication session to the mobile terminal via the second mobile communication network according to the request violates the quota or a further quota.
Example 18 is the method according to Example 17, wherein providing the information comprises providing information about whether registering the mobile terminal in the second mobile communication network or providing a communication session to the mobile terminal via the second mobile communication network according to the request violates the quota or the further quota.
Example 19 is the method according to Example 17 or 18, wherein the quota or the further quota is a quota limiting the mobile terminals registered in a specific network slice of the second mobile communication network and/or the number of communication sessions provided by the specific network slice of the second mobile communication network.
Example 20 is the method according to any one of Examples 17 to 19, wherein the quota or the further quota is fulfilled or not fulfilled irrespective of the number of mobile terminals registered in other network slices of the second mobile communication network than the specific network slice, if it limits the number of mobile terminals registered in the specific network slice, and is fulfilled or not fulfilled irrespective of the number of communication sessions provided by other network slices of the second mobile communication network than the specific network slice, if it limits the number of communication sessions provided by the specific network slice.
Example 21 is the method according to any one of Examples 16 to 20, comprising providing the information irrespective of whether registering the mobile terminal in the first mobile communication network or providing a communication session to the mobile terminal via the first mobile communication network according to the request violates the quota.
Example 22 is the method according to any one of Examples 16 to 20, comprising providing the information to the mobile terminal only if registering the mobile terminal in the first mobile communication network or providing a communication session to the mobile terminal via the first mobile communication network according to the request violates the quota.
Example 23 is the method according to any one of Examples 16 to 22, wherein the quota limits the number of mobile terminals registered in the first mobile communication network or limits the number of communication sessions provided by the first mobile communication network.
Example 24 is the method according to any one of Examples 16 to 23, wherein the quota is a quota of the first mobile communication network which is fulfilled or not fulfilled independently from the number of mobile terminals registered in the second mobile communication network or is a quota shared between the first mobile communication network which limits the sum of the number of mobile terminals registered in the first mobile communication network and the number of mobile terminals registered in the second mobile communication network or limits the sum of the number of communication sessions provided by the first mobile communication network and the number of communication sessions provided by the second mobile communication network.
Example 25 is the method according to any one of Examples 16 to 24, comprising generating a message indicating that the request is rejected and including the information about whether the mobile terminal may register with a second mobile communication network or the second mobile communication network may provide a communication session to the mobile terminal according to the request and is configured to transmit the request to the mobile terminal.
Example 26 is the method according to any one of Examples 16 to 25, wherein the first mobile communication network is a 4G mobile communication network and the second mobile communication network is a 5G mobile communication network or vice versa.
Example 27 is the method according to any one of Examples 16 to 26, wherein the first mobile communication network and the second mobile communication network support mobility of mobile terminals between each other by taking into account the quota that is subject to either the first mobile communication network or the second communication network or for both the first mobile communication network and the second mobile communication network.
Example 28 is the method according to any one of Examples 16 to 27, comprising determining whether registering the mobile terminal in the first mobile communication network or providing a communication session to the mobile terminal via the first mobile communication network according to the request violates the quota based on an Access Point Name used by the mobile terminal.
Example 29 is the method according to any one of Examples 16 to 28, comprising, if registering the mobile terminal in the first mobile communication network or providing a communication session to the mobile terminal via the first mobile communication network according to the request violates the quota and if the mobile terminal may not register with the second mobile communication network or the second mobile communication network may not provide a communication session to the mobile terminal according to the request, sending a specification of a waiting period to the mobile terminal after which the mobile terminal may request to register in the first mobile communication network or the second mobile communication network or may request a communication session from the first mobile communication network or the second mobile communication network.
Example 30 is the method according to any one of Examples 16 to 28, comprising, if registering the mobile terminal in the first mobile communication network or providing a communication session to the mobile terminal via the first mobile communication network according to the request violates the quota, sending a specification of a waiting period to the mobile terminal after which the mobile terminal may request to register in the first mobile communication network or may request a communication session from the first mobile communication network.
Example 31 is a mobile terminal as described with reference to figure 9.
Example 32 is a method for accessing a mobile communication network as described with reference to figure 10.

It should be noted that one or more of the features of any of the examples above may be combined with any one of the other examples.

According to further embodiments, a computer program and a computer readable medium comprising instructions, which, when executed by a computer, make the computer perform the method of any one of the above Examples are provided.

In the following, various examples will be described in more detail.

It may be desirable that a 5GS (Fifth Generation mobile communication network) is capable of interworking with an EPS (Evolved Packet System) mobile communication network, i.e. a 4G mobile communication network, in its PLMN or in another PLMN.

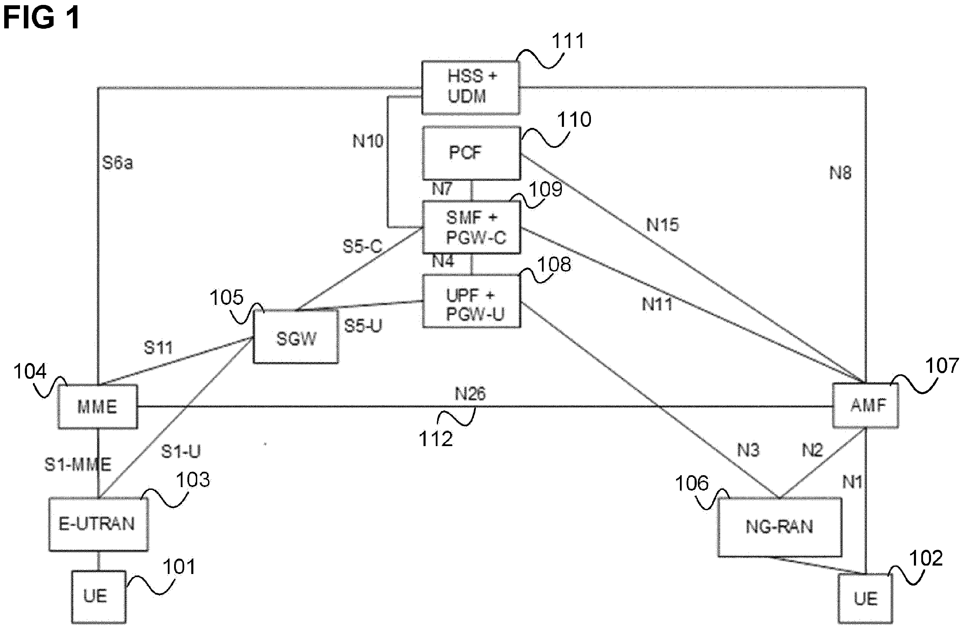

Figure 1 shows a communication system 100 illustrating interworking of a 5G communication with a 4G communication system for UE mobility support between 5G and 4G.

The communication system 100 comprises a 4G (Fourth Generation) UE (User Equipment) 101 and a 5G (Fifth Generation) UE 102, which may be the same mobile terminal at first operating as 4G UE 101 and, after moving or a handover, operating as 5G UE 102, i.e. the UEs 101, 102 may be the same UE, first connected to a 4G mobile communication network and then to a 5G mobile communication network. The other direction is also possible, i.e. the same UE may also move from the 5G mobile communication network to the 4G mobile communication network. This means that the UE is assumed to support both usage of a 5GC (5G core network) as well as an EPC (Evolved Packet Core) NAS (Non-Access Stratum).

The 4G UE 101 is connected via a 4G radio access network 103, i.e. an E-UTRAN (evolved UMTS (Universal Mobile Telecommunications System) Terrestrial Radio Access Network) to an MME (Mobility Management Entity) 104 and an SGW (Serving Gateway) 105.

The 5G UE 102 is connected to a 5G radio access network 106 and an AMF (Access and Mobility Management Function) 107.

The communication system 100 comprises components which combine 4G and 5G functionalities (so-called combo-nodes). These include a UPF (User Plane Function)+PGW-U (Packet Data Network Gateway User Plane) 108, an SMF (Session Management Function)+PGW-C (PGW Control Plane) 109, a PCF (Policy Control Function) 110 and an HSS (Home Subscriber Server)+UDM (Unified Data Management) 111. When the UE 101 sends an attach request to the MME 104, the HSS+UDM 111 has an indication of support for interworking with the 5GS (i.e. the 5G mobile communication network) for the requested APN (Access Point Name), such that the MME 104 can select the right PGW-C+SMF combo node 109 for the UE 101.

The SGW 105 is connected to the SMF+PGW-C 109 and the UPF+PGW-U 108. The MME 104 is connected to the HSS+UDM 111. The AMF 107 is connected to the PCF 110, the HSS+UDM 111 and the SMF+PGW-C 109. The 5G RAN 106 is connected to the UPF+PGW-U 108.

Furthermore, the MME 104 and the AMF 107 may be connected by an N26 interface 112.

The MME 104, the SGW 105, the UPF+PGW-U 108, the SMF+PGW-C 109, the PCF 110 and the HSS+UDM 111 are part of an Evolved Packet Core (EPC), i.e. part of the core network of the 4G mobile communication network.

The AMF 107, the UPF+PGW-U 108, the SMF+PGW-C 109, the PCF 110 and the HSS+UDM 111 are part of a 5GC, i.e. part of the core network of the 5G mobile communication network. Thus, components which combine functionalities of 4G and 5G are part of both the 4G core network and the 5G core network.

The SMF+PGW-C 109 is a control plane entity (common for the 4G (EPC) and the 5G core network (5GC)) for Session Management, it terminates the GTP-C (GPRS Tunneling Protocol - Control Plane) towards EPC (by the S5 interface to SGW 105) and HTTP/REST (Hypertext Transfer Protocol/Representational State Transfer) towards 5GC (by the N11 interface to AMF 107).

The HSS+UDM 111 is a subscription database (common for the EPC and the 5GC). It terminates a diameter towards EPC (via the S6a interface to MME 104) and HTTP/REST towards 5GC (via the N8 interface to the AMF 107 and the N10 interface to the SMF 109). In a communication system where the N26 interface is not deployed, the mobility source network and target network may share the UE subscription profile via HSS+UDM.

The SMF+PGW-C 109 may implement a plurality of SMFs (or SMF instances) and PGWs (or PGW instances or PGW resources). A UE 101 may have one or more PDN (Packet Data Network) connections in EPC. These PDN connections can be with the same or different PGWs.

A 5GS typically supports network slicing while an EPC may support a Dedicated Core Network (DCN).

Network slicing means that the 5G core network may have multiple core network slices and for each core network slice, the operator (also referred to MNO for Mobile Network Operator) may create multiple core network slice instances. For example, the 5G core network may include a network slice providing Enhanced Mobile Broadband and a network slice for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

An S-NSSAI (Single Network Slice Selection Assistance information) identifies a network slice and is included of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance is identified by an NSI (also referred to as NSI ID).

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

To allow UE mobility between 5GC and EPC, a PDU Session ID and its associated S-NSSAI should be made available in the 5GC and the EPC.

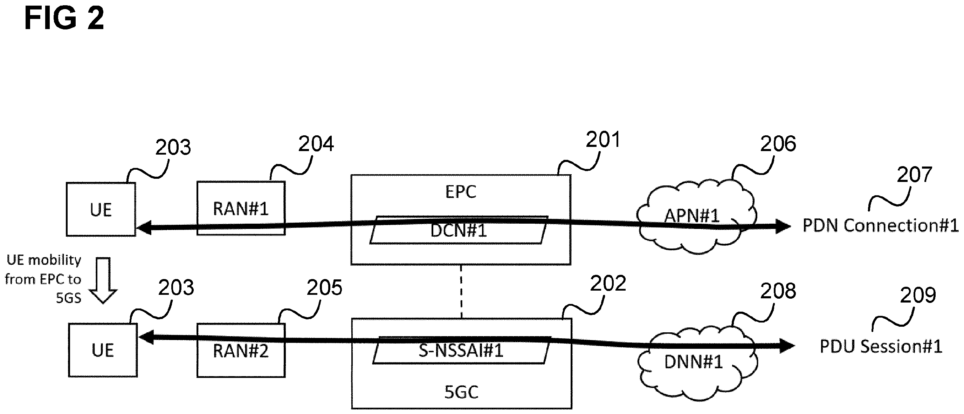

Figure 2 illustrates network slice support for interworking of an EPC 201 with a 5GC 202.

A UE is first connected to the EPC 201 via a 4G RAN and then connected to the 5GC 202 via a 5G RAN 205. Via an APN (access point name) 206 the EPC 201 provides the UE 203 first with a PDN (Packet Data Network) Connection 207. The 5GC provides the UE 203, when it is connected to it, via a DNN (Data Network Name) 208 with a PDU Session 209.

In case of transfer of the PDN Connection 207 to the 5GC, during PDN connection establishment request in EPC 201, the UE 203 allocates a PDU Session ID for the PDN connection 207. PGW-C+SMF 109 in EPC 201 provides to the UE 203 a S-NSSAI associated with the PDN connection based on the operator policy.

In a 4G or a 5G radio communication system like the radio communication system, network slice related quota may be defined. This means that for example the maximum number of UEs and/or the maximum number of PDU sessions provided by a network slice can be limited.

Network slice quota for a network slice may for example be defined only by the mobile network operator (MNO) or may also be defined by both a 3^{rd} party service provider (e.g. providing a service by means of the network slice) and the MNO. For example, the MNO and the 3^{rd} party service provider may have a corresponding service level agreement (SLA) prior to the network slice instantiation.

The maximum number of UEs in a network slice may be defined by a "Number of terminals" attribute. The maximum number of PDU Sessions may be defined by a "Number of connections" attribute. For example, according to the information model for the network slice NRM (Network Resource Model) a "maxNumberofUEs" attribute may be provided in an OAM (Operation, Administration and Maintenance).

According to one embodiment, to support network slice specific quota feature, there are three main functionalities as following:
- Storing of network slice related quota information: If a network slice is subject to a network slice quota checking on a maximum number of UEs and/or a maximum number of PDU Sessions/PDN Connections, it is assumed that the O&M should have for this network slice a) the information that it is subject to the network slice related quota checking, and b) the information of the quota of maximum number of UEs and/or maximum number of PDU Sessions for the network slice. To enable the network slice related quota enforcement, this information is configured and stored to one or more network functions in 5GC and/or in EPC.
- Monitoring a number of UEs registered for the network slice and/or a number of PDU Sessions established in the network slice: This functionality is responsible for counting and collecting the current number of UEs being registered for the network slice subject to a network slice quota checking on a maximum number of UEs and/or the current number of PDU Sessions successfully established in the network slice subject to a network slice quota checking on a maximum number of PDU Sessions. It may also have a functionality to send an indication whether the network slice quota has been reached or whether the current number of UEs and/or the current number of PDU Sessions have reached a certain threshold, which may not be the same as the maximum number of UEs and/or maximum number of PDU Sessions. The advantage of this threshold is to warn a network function in a mobile communication system that a certain threshold has been reached and before accepting any new requests for a network slice (registers to a network slice and/or establish a communication session in a network slice), a certain policy may apply to it, e.g., it is necessary to check for all new coming requests whether the network slice quota has been reached before accept the request.
- Enforcing the network slice related quota on the maximum number of UEs and/or the maximum number of PDU Sessions: In case, the quota on the maximum number of UEs and/or the maximum number of PDU Sessions is reached, the NF in 5GC/EPC rejects the UE's requested with a rejection cause and optionally with a back-off timer.

In the following, approaches are described for enforcing quota (in particular network slice specific quota) when there is interworking of two mobile communication networks, e.g. EPS and 5GS interworking (i.e. in case of a UE moving from EPS to 5GS or from 5GS to EPS in idle mode or connected mode).

A network slice specific quota means a maximum number of UEs and/or a maximum number of PDU Sessions in a specific network slice (i.e. a quota which is fulfilled depending only on the number of UEs or number of PDU sessions in that specific network slice, respectively, or both if the quota limits both).

In the following, a first exemplary approach is described in which the quota enforcement is performed at the MME (e.g. MME 104).

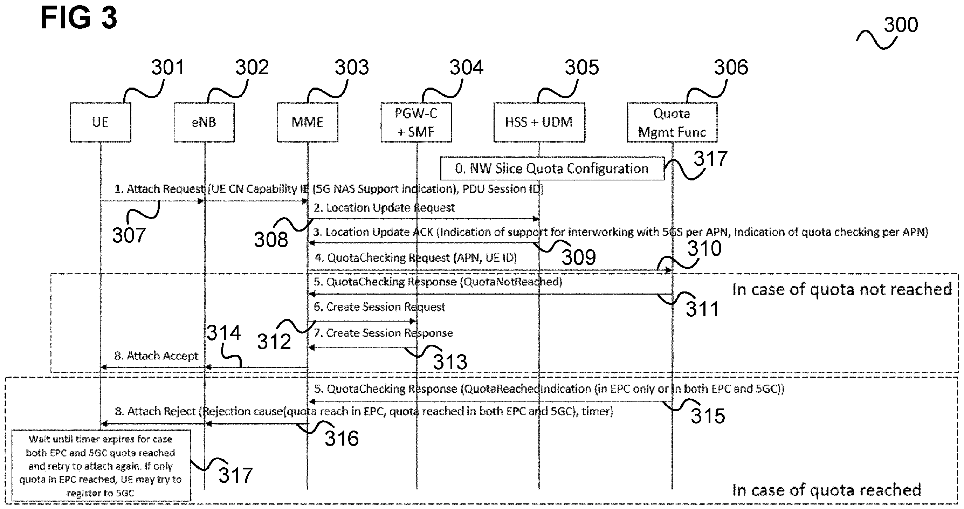

Figure 3 shows a flow diagram 300 illustrating a first exemplary approach for quota enforcement based on a UE subscription information extension.

The flow takes place between a UE 301 (e.g. corresponding to UE 101), an eNB 302 (e.g. of E-UTRAN 103), an MME 303 (e.g. corresponding to MME 104), a PGW-C+SMF 304 (e.g. corresponding to PGW-C+SMF 109), an HSS+UDM 305 (e.g. corresponding to HSS+UDM 111) and a quota management function 306.

The quota management function stores the network slice related quota information (e.g., the information of the quota of maximum number of UEs and/or maximum number of PDU Sessions for the network slice), and/or monitors a current number of UEs registered for the network slice and/or a current number of PDU Sessions established in the network slice.

The quota management function 306 can be an additional network function (NF) in 5GC or in OAM, or
- A network function (NF) co-located with an existing 5GC NF, e.g., NWDAF (Network Data Analytics Function), PCF (Policy Control Function), AMF (Access and Mobility Management Function), NSSF (Network Slice Selection Function)
- network function co-located with existing NF in OAM, e.g., NSMF (Network Slice Management Function)
- network function co-located with existing EPC NF, e.g., MME

In 307, the UE 301 sends an attach request to the MME 302, which includes an indication whether the UE supports 5G NAS.

In 308 and 309, the MME 302 retrieves UE's subscription profile, which includes an indication of support for interworking with 5GS for each subscribed APN.

Slice quota for number of UEs can be unified for both EPS and 5GS, or a different quota for 5GS and for EPS may be specified. To limit the number of UEs for a network slice accessing via the EPS, since the MME 302 is not aware of which S-NSSAI the UE is trying to access but only the APN to establish a PDN Connection, it is assumed that the MME has an information on which APN is subject to slice quota checking.

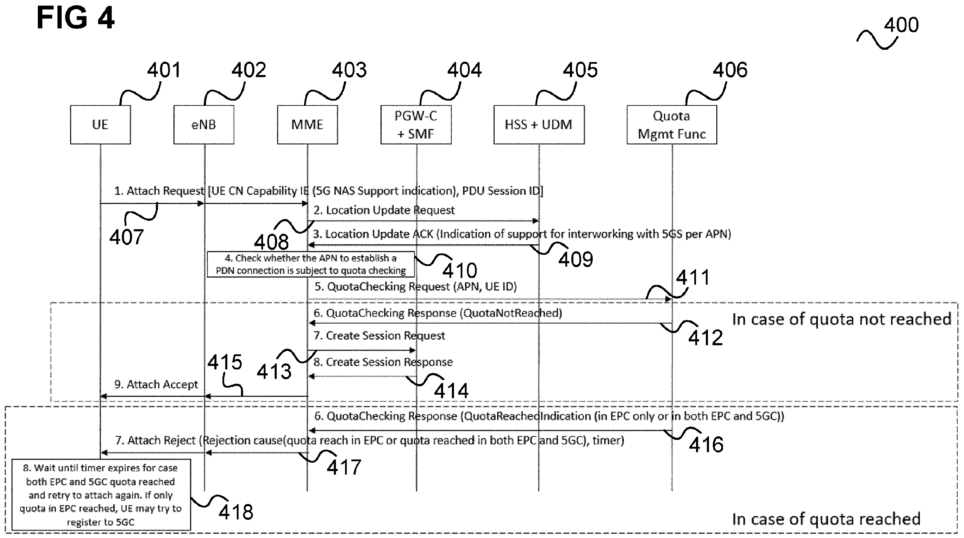

Such information can be made available by an extension of HSS+UDM 305 (as in the present example of figure 3) or having a local policy/configuration at the MME itself (described further below with reference to figure 4). In the present example, the information provided by the HSS+UDM 305 in 309 in response to the MME's subscription profile request in 308 includes information about for which APNs quota checking should be performed. A network slice quota may have been defined in the HSS+UDM 305 in a preceding operation 317.

It is assumed that a quota should be checked for the UE's APN.

Therefore, before the MME 303 proceeds to establish a PDN connection (i.e. prior to sending a "Create Session Request" to the PGW-C+SMF 304), the MME 303 checks whether the quota has been reached with the quota management function 306 in 310. The quota management function knows about a mapping of APN to S-NSSAI (e.g. by means of local configuration or policy).

If, in 311, the quota management function 306 responds that the quota is not reached, the MME 303 proceeds with the PDN connection establishment procedure with PGW-C+SMF 304, i.e. sends a create session request in 312 to which the PGW-C+SMF 304 responds with a create session response in 313. The MME 303 then sends an attach accept to the UE 301 in 314.

If, in 315, the quota management function 306 responds that the quota has been reached, no PDN Connection is established for the UE 301. Therefore, in 316, the MME 303 rejects the UE's request with a rejection cause of "Quota Reached in EPC", or "Quota Reached in both EPC and 5GC", depending on which is the case and depending on whether according to the operator's policy the UE 301 should be informed about both cases.

It should be noted that the respective mobile network operator may not want to explicitly give out the information that for a specific core network a quota has been reached. In that case, the rejection cause may simply be "Quota Reached" or "No resources available for this requested service".

In 317, the UE 301 may for example wait until a retry timer expires for the case of having been informed that both EPC and 5GC quota have been reached and retry to attach again after expiry of the timer. If it was only informed that the quota in the EPC has been reached, it may try to register with the 5GC directly after having received the attach reject. If the UE 301 was only informed that the quota in the EPC has been reached and a back-off timer is also provided, the UE 301 will not retry to access a service in the EPC until the timer is expired. However, this does not prohibit that the UE shall not try to register with the 5GC to access the same service but in the 5GC.

It is assumed that the UE may have a local configuration or a policy provided by the CN to guide the UE how to behave when the UE is not able to get a service as it receives a rejection to the UE's request. This could be for example to try to access the same service but via a different CN. One example could be the UE is trying to get an access to a mobile broadband service provided by a network slice in 5GC, but the 5GC indicates that this quota of this network slice has been reached and rejects the UE's request. As mentioned above, the UE may receive an indication from the 5GC that the UE may get similar service but via the EPC instead. If the UE does not receive an indication from the 5GC that the UE may get a similar service but via the EPC, the UE may check its local configuration or a policy available at the UE whether this service could be accessed via the EPC.

Table 1 shows an example of a network slice quota configuration at the HSS+UDM 305.

**Table 1**

| APN | Associated S-NSSAI | EPS-5GS Interworking Support | Subject to NW Slice/APN Quota Checking | 5GS-EPS Unified Quota |
|---|---|---|---|---|
| APN#1 | S-NSSAI#1 | Yes | Yes | No |
| APN#2 | S-NSSAI#2 | Yes | Yes | Yes |
| APN#3 | S-NSSAI#3 | Yes | No | - |

It should be noted that the HSS+UDM may not need to be exactly configured as shown in the Table 1, but only a subset of them as shown in the Table 2 below.

**Table 2**

| APN | EPS-5GS Interworking Support | Subject to NW Slice/APN Quota Checking |
|---|---|---|
| APN#1 | Yes | Yes |
| APN#2 | Yes | Yes |
| APN#3 | Yes | No |

A similar network slice configuration as shown in Table 1 or Table 2 may also be available at the NF that should be aware of the network slice subject to slice quota checking, e.g., at the MME, at the PGW-C+SMF combo-node, at the PCF, or at the network slice quota management function.

In the following, an alternative of the example of figure 3 is described with reference to figure 4, where the MME has an information on which APN is subject to slice quota checking by means of a local policy/configuration at the MME.

Figure 4 shows a flow diagram 400 illustrating another example for the first exemplary approach for quota enforcement based on an MME extension.

Similarly to figure 3, the flow takes place between a UE 401, an eNB 402, an MME 403, a PGW-C+SMF 404, an HSS+UDM 405 and a quota management function 406.

The flow of 407, 408 and 409 is similar to 307, 308 and 309.

In 410, the MME 403 checks whether the APN, for a PDN connection should be established with the UE 401 is subject to quota checking.

Assuming that this is the case, the MME 403 checks whether the quota has been reached with the quota management function 406 in 411.

The flow of 412 to 418 is similar to 311 to 317.

In the following, a second exemplary approach is described in which the quota enforcement is performed at the PGW-C+SMF combo node.

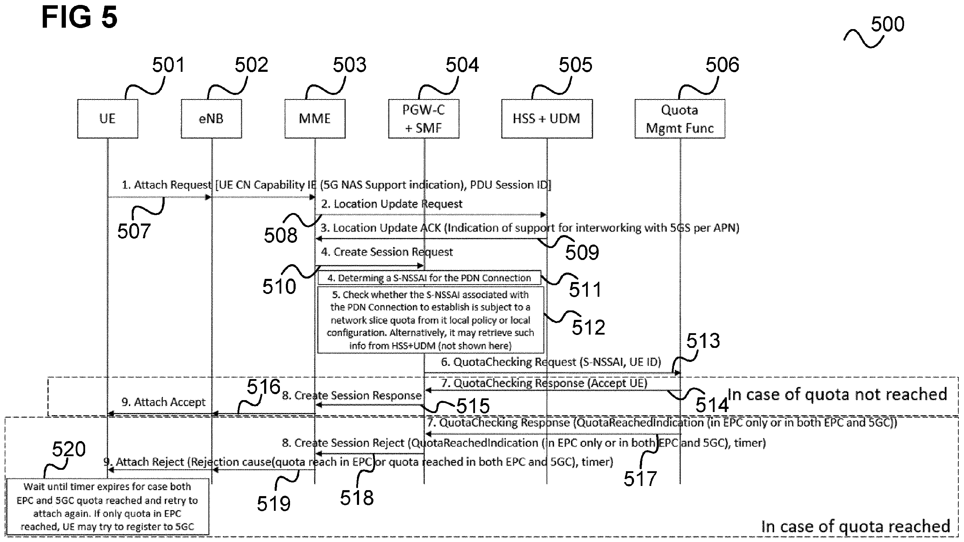

Figure 5 shows a flow diagram 500 illustrating a second exemplary approach for quota enforcement.

Similarly to figure 3, the flow takes place between a UE 501, an eNB 502, an MME 503, a PGW-C+SMF 504, an HSS+UDM 505 and a quota management function 506.

In 507, the UE 501 sends an attach request to the MME 502, which includes an indication whether the UE supports 5G NAS.

In 508 and 509, the MME 502 retrieves UE's subscription profile, which includes an indication of support for interworking with 5GS for each subscribed APN.

Slice quota for number of UEs can be unified for both EPS and 5GS, or a different quota for 5GS and for EPS may be specified. For the present approach, it is assumed that the MME 502 is not aware whether the network slice quota checking is to be performed.

In 510, the MME 503 sends a Create Session request to the PGW-C+SMF 504 to establish a PDN connection.

In 511, the PGW-C+SMF 504 determines which S-NSSAI to associate with the PDN Connection in EPS.

In 512, based on the local configuration or local policy available at the PGW-C+SMF, the PGW-C+SMF 504 determines whether the S-NSSAI is subject to slice quota checking. If the S-NSSAI associated with the PDN Connection to establish is subject to network slice quota checking, the PGW-C+SMF 504 checks with the quota management function 506 in 513 whether the quota has been reached with the quota management function.

If, in 514, the quota management function 506 responds that the quota has not been reached, the quota management function increases the counter of UEs and responds to the PGW-C+SMF 504 such that the UE is attached to EPS and a PDN Connection is then established by that the PGW-C+SMF 504 sends a create session response to the MME 503 in 515 and the MME 503 sends an attach accept to the UE 501 in 516.

If the quota has been reached the quota management function, in 517, responds that the quota has been reached and provides a rejection cause of "Quota Reached in EPC", or "Quota Reached in both EPC and 5GC". In that case, no PDU Connection associated with this S-NSSAI is established and the PGW-C+SMF 504 sends a create session reject in 518 to the MME 503 accordingly. In case that no other PDU Connection is established either, the MME sends an Attach Reject in 519 with a respective rejection cause code provided by the quota management function 506 to the UE 501.

The rejection cause may be "Quota Reached in EPC", or "Quota Reached in both EPC and 5GC", depending on which is the case and depending on whether according to the operator's policy the UE 301 should be informed about both cases.

In 520, the UE 501 may for example wait until a retry timer expires for the case of having been informed that both EPC and 5GC quota have been reached and retry to attach again after expiry of the timer. If it was only informed that the quota in the EPC has been reached, it may try to register with the 5GC directly after having received the attach reject. According to one embodiment, if the UE 501 was only informed that the quota in the EPC has been reached and a back-off timer is also provided, the UE 501 will not retry to access a service in the EPC until the timer is expired. However, this does not prohibit that the UE shall not try to register with the 5GC to access the same service but in the 5GC.

It is assumed that the UE may have a local configuration or a policy provided by the CN to guide the UE how to behave when the UE is not able to get a service as it receives a rejection to the UE's request. This could be for example to try to access the same service but via a different CN. One example could be that the UE tries to get an access to a mobile broadband service provided by a network slice in 5GC, but the 5GC indicates that this quota of this network slice has been reached and rejects the UE's request. As mentioned above, the UE may receive an indication from the 5GC that the UE may get a similar service but via the EPC instead. If the UE does not receive an indication from the 5GC that the UE may get similar service but via the EPC, the UE may check its local configuration or a policy available at the UE whether this service could be accessed via the EPC.

In the following, a second exemplary approach is described in which the quota enforcement is performed at the PCF.

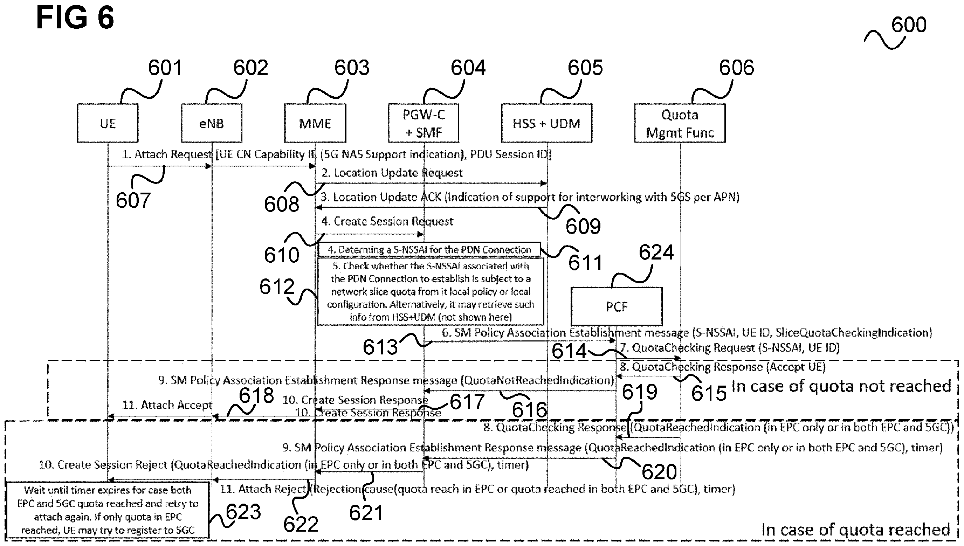

Figure 6 shows a flow diagram 600 illustrating a third exemplary approach for quota enforcement.

Similarly to figure 5, the flow takes place between a UE 601, an eNB 602, an MME 603, a PGW-C+SMF 604, an HSS+UDM 605 and a quota management function 606. Further, a PCF 624 is involved in the flow.

In 607, the UE 601 sends an attach request to the MME 602, which includes an indication whether the UE supports 5G NAS.

In 608 and 609, the MME 602 retrieves UE's subscription profile, which includes an indication of support for interworking with 5GS for each subscribed APN.

Slice quota for number of UEs can be unified for both EPS and 5GS, or a different quota for 5GS and for EPS may be specified. For the present approach, it is assumed that the MME 602 is not aware whether the network slice quota checking is to be performed.

In 610, the MME 603 sends a Create Session request to the PGW-C+SMF 604 to establish a PDN connection.

In 611, the PGW-C+SMF 604 determines which S-NSSAI to associate with the PDN Connection in EPS.

In 612, the PGW-C+SMF 604 determines whether the S-NSSAI is subject to slice quota checking. If the S-NSSAI associated with the PDN Connection to establish is subject to network slice quota checking, the PGW-C+SMF 604 sends, in 613, an SM Policy Association Establishment message to the PCF 624, which includes a UE-ID of the UE 601, the determined S-NSSAI and an indication that quota management is required. If this UE has not been counted for the S-NSSAI, the PCF 624 checks whether the quota has been reached with the quota management function in 614.

If, in 615, the quota management function 606 responds that the quota has not been reached, the quota management function increases the counter of UEs and responds to the PCF 604 such that the UE is attached to EPS and a PDN Connection is then established by that the PCF 624 sends an SM Policy Association Establishment Response message (with an indication that the quota has not been reached) in 616, the PGW-C+SMF 604 sends a create session response to the MME 603 in 617 and the MME 603 sends an attach accept to the UE 601 in 618.

If the quota has been reached the quota management function, in 619, responds that the quota has been reached and provides a rejection cause of "Quota Reached in EPC", or "Quota Reached in both EPC and 5GC". In 620, the PCF forwards the rejection to the PGW-C+SMF and no PDN Connection associated with this S-NSSAI is established and the PGW-C+SMF 604 sends a create session reject in 621 to the MME 603 accordingly. In case that no other PDN Connection is established either, the MME sends an Attach Reject in 622 with a respective rejection cause code provided by the quota management function 606 to the UE 601.

The rejection cause may be "Quota Reached in EPC", or "Quota Reached in both EPC and 5GC", depending on which is the case and depending on whether according to the operator's policy the UE 301 should be informed about both cases.

In 623, the UE 601 may for example wait until a retry timer expires (i.e. a waiting period expires) for the case of having been informed that both EPC and 5GC quota have been reached and retry to attach again after expiry of the timer. If it was only informed that the quota in the EPC has been reached, it may try to register with the 5GC directly after having received the attach reject. According to one embodiment, if the UE 601 was only informed that the quota in the EPC has been reached and a back-off timer is also provided, the UE 601 will not retry to access a service in the EPC until the timer is expired. However, this does not prohibit that the UE shall not try to register with the 5GC to access the same service but in the 5GC.

It is assumed that the UE may have a local configuration or a policy provided by the CN to guide the UE how to behave when the UE is not able to get a service as it receives a rejection to the UE's request. This could be for example to try to access the same service but via a different CN. One example could be that the UE tries to get an access to a mobile broadband service provided by a network slice in 5GC, but the 5GC indicates that this quota of this network slice has been reached and rejects the UE's request. As mentioned above, the UE may receive an indication from the 5GC that the UE may get similar service but via the EPC instead. If the UE does not receive an indication from the 5GC that the UE may get a similar service but via the EPC, the UE may check its local configuration or a policy available at the UE whether this service could be accessed via the EPC.

The examples of figures 3 to 6 may be summarized as follows:
- Example of figure 3: MME has an information about which APN is subject to slice quota checking based on information provided by an extension of HSS+UDM
- Example of figure 4: MME has an information about which APN is subject to slice quota based on a local policy/configuration at the MME itself
- Example of figure 5: PGW-C+SMF determines whether the S-NSSAI is subject to slice quota checking. If subject to network slice quota checking, PGW-C+SMF checks with the quota management function whether the slice quota has been reached
- Example of figure 6: In addition the example of figure 5, PGW-C+SMF checks with the quota management function via the PCF whether the slice quota has been reached. PCF decides whether to accept or reject the PDN Connection Establishment request and sends the result to PGW-C+SMF.

While all flows shown in figures 3 to 6 show a Request/Response model for getting the status of network slice quota, also Subscribe/Notify models may be used, i.e. a NF may subscribe to being notified when a quota has been reached by the quota management function. With this approach, the NF responsible for quota enforcement does not need to request for getting the status of network slice quota each time, when the MME receives an Attach Request (figures 3 and 4) or when the SMF combo node receives a Create Session Request (figure 5).

Further, different quota may be defined for number of UEs and number of sessions (e.g. PDU sessions). In the response of checking network slice quota status, the quota management function may respond with an indication whether the quota status is in terms of "number of UEs" or "number of PDU Sessions".

It should further be noted that in EPC, there is no separation of registration and PDU Connection. Therefore, if a UE is registered in the EPC with a default bearer this may be counted into the number of UE registrations and as wells as the number of PDU sessions. This means that an initial registration of a UE in EPC is counted into two counters (i.e. increases both the UE counter (counting the number of registered UEs) as well as the session counter (counting the number of provided sessions)).

It should further to be noted that when the UE is already attached in EPC and the UE requests for a PDN Connection Establishment in EPC for a dedicated EPS bearer, it should be taken into account that the PDN Connection to be established will be associated with a S-NSSAI. For example, as soon as the MME receives such PDN Connection Establishment in EPS, the MME checks whether this S-NSSAI or APN is subject to quota checking before proceeding further to establish a PDN connection. Such checking can be made available based on the local configuration or local policy available at the MME. Alternatively, MME may not be necessarily to be aware of such quota checking but simply forwards the PDN Connection Request to the PGW-C/SMF and this combo node may check whether the S-NSSAI is subject to quota checking and it may also check whether the quota has been reached by requesting to the PCF or to a quota management function.

It should further to be noted that during the initial Attach procedure in EPC, in case there is a PDN Connection to be established including a default EPS bearer or a dedicated EPS bearer or both, the MME may check whether the S-NSSAI associated to the default EPS bearer and/or the dedicated EPS bearer is subject to quota checking, and if that is the case, the MME may check whether the quota has been reached. Such quota checking can be in terms of number of UEs already registered in the S-NSSAI associated to the default EPS bearer and/or the S-NSSAI associated to the dedicated EPS bearer. Alternatively, such quota checking can also be in terms of PDU Sessions already established in the network slice of the S-NSSAI associated to the default EPS bearer and/or the S-NSSAI associated to the dedicated EPS bearer. Alternatively, such quota checking can also be both in terms of number of UEs and in terms of PDU Sessions. Depending on what quota has reached, the rejection may include a rejection cause indicating what has been reached either in terms of number of UEs or number of PDU Sessions or both number of UEs and number of PDU Sessions. If the network operator prefers not to enhance the MME to be aware of such network slice quota checking, the MME simply forward the PDN Connection Request to the PGW-C/SMF and this combo node may check whether the S-NSSAI is subject to quota checking and it may also check whether the quota has been reached by requesting to the PCF or to a quota management function.

While all flows shown in figures 3 to 6 show the procedure related to the Attach procedure in EPS, similar principles for supporting EPS-5GS interworking could also be applicable for the case. For example, in case of IDLE mode UE (there is at least one PDN connection already established in EPS), when the UE is moving from EPS to 5GS, the UE sends a Registration Request with the S-NSSAIs associated with the established PDN Connection. Based on the local configuration/operator's policy configured by the OAM or other means available at the AMF, the AMF checks whether the S-NSSAI associated with the PDN Connection is subject to the network slice quota checking which can be in terms of number of UEs or number of PDU Sessions or both. In case the quota for the S-NSSAI associated with the PDN Connection to be transferred from EPS to 5GS has been reached, the AMF responds to the Registration Request with the rejected S-NSSAI. It should be noted that such quota checking may only be needed when the quota is only applicable in 5GS and not in EPS. This is because, in case of unified quota management (one quota applicable for both EPS and 5GS), if the UE has been already registered in EPS and a PDN Connection already established in EPS, quota checking has already been done in EPS according to one embodiment.

Another example is that in case of an IDLE mode UE (there is at least one PDU Session already established in 5GC), when the UE is moving from 5GS to EPS, the MME in EPC retrieves UE context from the AMF in 5GC, when the AMF determines whether a PDU Session can be transferred to the EPS. If yes, the AMF may check whether the PDU Session to be transferred to the EPS is subject to quota checking. If yes, the AMF may check whether the quota has been reached in terms of number of UEs or number of PDU Sessions or both. There may be a case that the AMF may need to communicate with the PGW-C/SMF to get the PDU Session context for the PDU Session to be transferred to the EPS, in such case, the PGW-C/SMF may check whether the PDU Session to be transferred to the EPS is subject to the quota checking and may check whether the quota has been reached. Alternative to quota checking at the AMF or at the SMF, once the MME receives the UE context from the AMF, the MME may do such quota checking or while the MME communicates with the PGW-C/SMF to complete the transfer of PDU Session to the EPS, the PGW-C/SMF may do such checking as well. A similar concept of network quota sharing for both EPS and 5GS or the concept of specific network quota for each CN could also be applied here.

Another example is that in case of a CONNECTED mode UE, when the UE is moving from EPS to 5GS, the MME may not provide to the AMF a S-NSSAI associated with the PDN Connection to be transferred from EPS to 5GS. In this case, the AMF may retrieve the associated S-NSSAI to the PDN Connection from the PGW-C/SMF. After knowing which S-NSSAI associated with the PDN Connection to be transferred to the 5GS, the AMF may check whether the S-NSSAI associated with the PDN Connection is subject to the network slice quota checking which can be in terms of number of UEs or number of PDU Sessions or both. In case the quota for the S-NSSAI associated with the PDN Connection to be transferred from EPS to 5GS has been reached, the AMF responds to the MME that the PDU Session to be transferred could not be performed, since the network slice quota has been reached. The MME may further inform the RAN and further to the UE that the handover cannot be performed and it is better to keep PDN connection in EPS. If the network slice quota for the PDU Session to be transferred to 5GS has not been reached, the usual handover procedure would proceed.

Another example is that in case of a CONNECTED mode UE, when the UE is moving from 5GS to EPS, the RAN in 5G sends a handover required message to the AMF, which then triggers the AMF to determine which PDU Session can be transferred to the EPS. For the PDU Session that can be transferred to the EPS, the AMF retrieves the PDU Session context from the PGW-C/SMF. Checking whether the quota has been reached in EPS can be done either by the PGW-C/SMF or the AMF. In case there is no such network slicing concept in EPS, there may be no quota to be applied in EPS, and hence, no quota to be checked when transferring a PDU Session to the EPS.

In addition to the IDLE or CONNECTED mode UE mobility between EPC and 5GC, it should further be noted that a similar concept of network quota sharing for both EPS and 5GS or the concept of specific network quota for each CN could also be applicable . For example, in case of CN specific network slice quota (quota for each CN), when the UE wants to move from EPS to 5GS, if a network function in 5GS recognizes that the network slice quota of the S-NSSAI that the UE would like to access via the 5GC has reached, the CN function in 5GC may inform the UE to keep staying in the EPS, so that the communication service could be maintained in the EPS. Such mechanism could also be applicable for the case of UE mobility from 5GC to EPC, i.e. if the quota of EPC has been reached, a network function in EPC may inform a network function in 5GC that it is better to not handover the PDU Session in 5GC to the EPS. For the case that a network slice quota is shared for both EPS and 5GS, obviously, there is no problem for the UE to move between EPS and 5GS, since the UE has already been counted for registering to the network slice and/or already been counted for having a PDU Session for the network slice in 5GS. Moving between EPS and 5GS would not change the number of UE or the number of PDU Sessions to be accounted for the network slice quota.

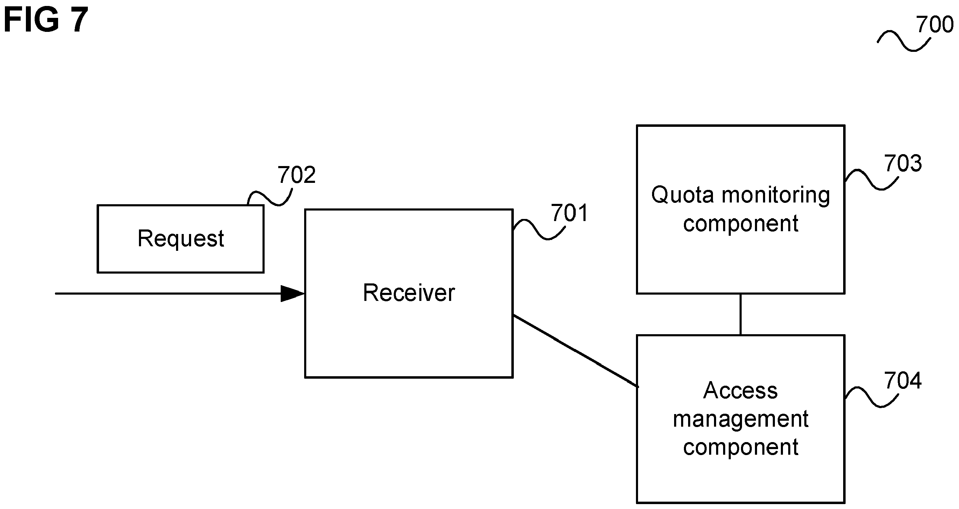

In summary, according to various embodiments, a communication network arrangement is provided as illustrated in figure 7.

Figure 7 shows a communication network arrangement 700 according to an embodiment.

The communication network arrangement 700 comprises a receiver 701 configured to receive a request 702 to register a mobile terminal in a first mobile communication network or to provide a communication session to the mobile terminal via the first mobile communication network.

The communication network arrangement 700 further comprises a quota monitoring component 703 configured to determine whether registering the mobile terminal in the first mobile communication network or providing a communication session to the mobile terminal via the first mobile communication network according to the request violates a quota.

Further, the communication network arrangement 700 comprises an access management component 704 configured to reject the request 702 if registering the mobile terminal in the first mobile communication network or providing a communication session to the mobile terminal via the first mobile communication network according to the request 702 violates the quota and provide information to the mobile terminal about whether the mobile terminal may register with a second mobile communication network or the second mobile communication network may provide a communication session to the mobile terminal according to the request 702.

According to various embodiments, in other words, if a quota (valid for the first mobile communication network) has been reached and therefore does not allow a mobile terminal to be provided with a service (registration or communication session) by a first mobile communication network, a network component informs the mobile terminal about whether a second mobile communication network may provide the service. This information may in particular specify that the second mobile communication network may not provide the service because of a quota valid for the second mobile communication network (which may be the same quota or a further quota) having been reached.

The communication network arrangement 700 further comprises a quota storage component configured to store for each network slice a) the information whether a network slice is subject to the network slice related quota checking on the maximum number of mobile terminals and/or on the maximum number of communication sessions, b) the information of the quota of maximum number of mobile terminals and/or maximum number of communication sessions.

The quota monitoring component may for example monitor (e.g. count) a current number of UEs and/or a current number of communication sessions (e.g. PDU Sessions).

The approach of figure 7 may for example be used in context of network slice quota management for 5GS-EPS interworking (in particular in terms of number of UEs), e.g. to allow an operator to enforce network slice related quota (e.g. based on a service level agreement) across different mobile communication systems (e.g. 5GS and EPS) in a non-roaming and a roaming scenario. For roaming scenario, the H-PLMN (home PLMN) may have an agreement with the V-PLMN (visited PLMN), e.g., whether the quota can be shared among the two different mobile communication systems in the V-PLMN or the quota should be separated for these two mobile communication systems in the V-PLMN, or the quota may be just applied to one of the two mobile communication systems in V-PLMN. Alternatively, in case of no such agreement, the V-PLMN may have its own policies on how to manage their network slice quota in its V-PLMN networks.

By providing information to the mobile terminal about whether the mobile terminal may register with a second mobile communication network or the second mobile communication network may provide a communication session to the mobile terminal according to the request, e.g. by having a rejection cause indicating whether quota in EPS or in 5GS or in both EPS and 5GS has been reached, a mobile terminal
- may be steered to access the same service but via a different mobile communication network in case the quota has been reached in only one of the mobile communication networks (in case of independent quota management, i.e. separate quota for both networks) and
- may be instructed to not try to access the same service (e.g. as the quota has been reached for both EPS and 5GS) via the second communication network, respectively.

According to one embodiment, the first mobile communication network is a 4G communication network and the second mobile communication network is a 5G communication network. For a 5G mobile communication system that supports interworking with EPC, when the UE performs an Attach Request in EPS and there is PDN Connection associated with a S-NSSAI to be established, the network slice quota should take this UE and the PDN Connection into account. According to various embodiments, network slice quota can be a unified (i.e. shared) quota (one quota for both EPS and 5GS) or a system independent quota (separate quota for EPS and for 5GS). This means that a network operator may freely specify whether the network slice quota (e.g. in terms of maximum number of UEs) should be unified or should be system independent for EPS and for 5GS. Unified quota management for maximum number of UEs means that there is one quota on maximum number of UEs registered for a S-NSSAI regardless whether the UE is registered via the core network of the first mobile communication network (e.g. EPC) or via the core network of the second mobile communication network (e.g. 5GC). Independent quota management means that there is a first quota for the core network of the first mobile communication network (e.g. EPC) and a second quota for the core network of the second mobile communication network (e.g. 5GC), wherein the first quota and the second quota may be different.

Various embodiments allow the EPS (i.e. 4G mobile communication network) to know which APN is subject to network slice quota checking and to enforce the quota limit accordingly (e.g., at MME). According to various embodiments, a rejection cause is provided to the mobile terminal (a UE in this embodiment) indicating a network slice quota has been reached either in EPS or in both EPS and 5GS. If it is indicated only that a quota in EPS has been reached, the UE may try to access a similar service (registration or communication session) via the 5GS. A timer value may be provided to the UE, so that the UE does not send a request for same service until it has waited for a period given by the timer value.

The mobile terminal may be a roaming or a non-roaming mobile terminal.

It should be noted that there may exist different quota for roaming and non-roaming terminals. For example, there may be quota for
- Maximum number of terminals that can use a specific network slice simultaneously
- Maximum number of non-roaming terminals that can use a specific network slice simultaneously
- Maximum number of roaming terminals that can use a specific network slice simultaneously
- Maximum number of concurrent sessions supported by a specific network slice
- Maximum number of concurrent non-roaming sessions supported by a specific network slice
- Maximum number of concurrent roaming sessions supported by a specific network slice

This allows the operator to differentiate the number of non-roaming UEs and the number of roaming UEs and similarly the number of sessions of non-roaming UEs and roaming UEs.

In case of network deployment with multiple MMEs or multiple PGW-C+SMFs or multiple PCFs or multiple quota management functions, there can be a concept of local quota dedicated for a certain area covered by the specific subset of MMEs or the subset of PGW-C+SMF, the sum of local quota in each area would result to the global quota for the whole PLMN of specific S-NSSAI (specific APN). There can be a network function being as a master of coordinating and determining how much to allocate the local quota from the global quota. This master can be located in the core network or in the OAM.

It should be noted that "registering the mobile terminal in the first mobile communication network or providing a communication session to the mobile terminal via the first mobile communication network according to the request" is meant that the alternative holds which is requested by the request, i.e. registering the mobile terminal in the first mobile communication network if the request requests registration and providing a communication session to the mobile terminal via the first mobile communication network if the request requests a communication session. The formulation with "according to the first request" instead of "according to the request" as used below is to be understood in the same way.

The communication network arrangement for example carries out a method as illustrated in figure 8.

Figure 8 shows a flow diagram 800 illustrating a method for managing mobile communication network access.

In 801, a request to register a mobile terminal in a first mobile communication network or to provide a communication session to the mobile terminal via the first mobile communication network is received.

In 802, it is determined whether registering the mobile terminal in the first mobile communication network or providing a communication session to the mobile terminal via the first mobile communication network according to the request violates a quota.

In 803, the request is rejected if registering the mobile terminal in the first mobile communication network or providing a communication session to the mobile terminal via the first mobile communication network according to the request violates the quota.

In 804, information is provided to the mobile terminal about whether the mobile terminal may register with a second mobile communication network or the second mobile communication network may provide a communication session to the mobile terminal according to the request.

Figure 9 shows a mobile terminal 900 according to an embodiment.

The mobile terminal 900 comprises a transmitter 901 configured to transmit a first request to register the mobile terminal in a first mobile communication network or to provide a communication session to the mobile terminal via the first mobile communication network.

The mobile terminal 900 further comprises a receiver 902 configured to receive a rejection of the request and information to the mobile terminal about whether the mobile terminal may register with a second mobile communication network or the second mobile communication network may provide a communication session to the mobile terminal according to the first request.

Further, the mobile terminal 900 comprises a controller 903 configured to control the transmitter 901 to transmit a second request to register the mobile terminal in the second mobile communication network or to provide a communication session to the mobile terminal via the second mobile communication network according to the first request if the information specifies that the mobile terminal may register with the second mobile communication network or the second mobile communication network may provide a communication session to the mobile terminal according to the first request and to avoid, at least during a waiting period, transmitting the second request to register the mobile terminal in the second mobile communication network or to provide a communication session to the mobile terminal via the second mobile communication network according to the first request if the information specifies that the mobile terminal may not register with the second mobile communication network or the second mobile communication network may not provide a communication session to the mobile terminal according to the first request

The receiver may be configured to receive a specification of the waiting period from the network side (e.g. an access management component which may for example also send the rejection of the request).

Figure 10 shows a flow diagram 1000 illustrating a method for accessing a mobile communication network, e.g. carried out by a mobile terminal.

In 1001, a first request to register the mobile terminal in a first mobile communication network or to provide a communication session to the mobile terminal via the first mobile communication network is transmitted.

In 1002, a rejection of the request and information to the mobile terminal about whether the mobile terminal may register with a second mobile communication network or the second mobile communication network may provide a communication session to the mobile terminal according to the first request are received.

In 1003, a second request to register the mobile terminal in the second mobile communication network or to provide a communication session to the mobile terminal via the second mobile communication network according to the first request is transmitted if the information specifies that the mobile terminal may register with the second mobile communication network or the second mobile communication network may provide a communication session to the mobile terminal according to the first request

In 1004, it is avoided, at least during a waiting period, to transmit the second request to register the mobile terminal in the second mobile communication network or to provide a communication session to the mobile terminal via the second mobile communication network according to the first request if the information specifies that the mobile terminal may not register with the second mobile communication network or the second mobile communication network may not provide a communication session to the mobile terminal according to the first request.

The components of the communication network arrangement and the mobile terminal (e.g. the receivers, the quota monitoring component and the access management component, the transmitter and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to further embodiments, a communication system is provided comprising the mobile terminal and the communication network arrangement. Similarly, a method may be provided combining the method of managing mobile communication network access and the method of accessing a mobile communication network.

Furthermore, it should be noted that embodiments and examples described in context of the communication network arrangement are analogously valid for the methods and the mobile terminal.

According to a further embodiment, a communication network arrangement is provided comprising a receiver configured to receive a request to register a mobile terminal in a first mobile communication network; a quota monitoring component configured to determine whether a quota which limits the sum of the number of mobile terminals registered in the first mobile communication network and the number of mobile terminals registered in a second mobile communication network has been reached and an access management component configured to reject the request if the quota has been reached. Further, a corresponding method for managing mobile communication network access may be provided.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising:
a receiver configured to receive a request to register a mobile terminal in a first mobile communication network or to provide a communication session to the mobile terminal via the first mobile communication network;
a quota monitoring component configured to determine whether registering the mobile terminal in the first mobile communication network or providing a communication session to the mobile terminal via the first mobile communication network according to the request violates a quota;
an access management component configured to
reject the request if registering the mobile terminal in the first mobile communication network or providing a communication session to the mobile terminal via the first mobile communication network according to the request violates the quota and
provide information to the mobile terminal about whether the mobile terminal may register with a second mobile communication network or the second mobile communication network may provide a communication session to the mobile terminal according to the request.

2. The communication network arrangement according to claim 1, wherein the quota monitoring component or a further quota monitoring component of the communication arrangement is configured to determine whether registering the mobile terminal in a second mobile communication network or providing a communication session to the mobile terminal via the second mobile communication network according to the request violates the quota or a further quota.

3. The communication network arrangement according to claim 2, wherein providing the information comprises providing information about whether registering the mobile terminal in the second mobile communication network or providing a communication session to the mobile terminal via the second mobile communication network according to the request violates the quota or the further quota.

4. The communication network arrangement according to claim 2 or 3, wherein the quota or the further quota is a quota limiting the mobile terminals registered in a specific network slice of the second mobile communication network and/or the number of communication sessions provided by the specific network slice of the second mobile communication network.

5. The communication network arrangement according to any one of claims 2 to 4, wherein the quota or the further quota is fulfilled or not fulfilled irrespective of the number of mobile terminals registered in other network slices of the second mobile communication network than the specific network slice, if it limits the number of mobile terminals registered in the specific network slice, and is fulfilled or not fulfilled irrespective of the number of communication sessions provided by other network slices of the second mobile communication network than the specific network slice, if it limits the number of communication sessions provided by the specific network slice.

6. The communication network arrangement according to any one of claims 1 to 5, wherein the access management component is configured to provide the information irrespective of whether registering the mobile terminal in the first mobile communication network or providing a communication session to the mobile terminal via the first mobile communication network according to the request violates the quota.

7. The communication network arrangement according to any one of claims 1 to 5, wherein the access management component is configured to provide the information to the mobile terminal only if registering the mobile terminal in the first mobile communication network or providing a communication session to the mobile terminal via the first mobile communication network according to the request violates the quota.

8. The communication network arrangement according to any one of claims 1 to 7, wherein the quota limits the number of mobile terminals registered in the first mobile communication network or limits the number of communication sessions provided by the first mobile communication network.

9. The communication network arrangement according to any one of claims 1 to 8, wherein the quota is a quota of the first mobile communication network which is fulfilled or not fulfilled independently from the number of mobile terminals registered in the second mobile communication network or is a quota shared between the first mobile communication network which limits the sum of the number of mobile terminals registered in the first mobile communication network and the number of mobile terminals registered in the second mobile communication network or limits the sum of the number of communication sessions provided by the first mobile communication network and the number of communication sessions provided by the second mobile communication network.

10. The communication network arrangement according to any one of claims 1 to 9, wherein the access management component is configured to generate a message indicating that the request is rejected and including the information about whether the mobile terminal may register with a second mobile communication network or the second mobile communication network may provide a communication session to the mobile terminal according to the request and is configured to transmit the request to the mobile terminal.

11. The communication network arrangement according to any one of claims 1 to 10, wherein the access management component is configured, if registering the mobile terminal in the first mobile communication network or providing a communication session to the mobile terminal via the first mobile communication network according to the request violates the quota and if the mobile terminal may not register with the second mobile communication network or the second mobile communication network may not provide a communication session to the mobile terminal according to the request, send a specification of a waiting period to the mobile terminal after which the mobile terminal may request to register in the first mobile communication network or the second mobile communication network or may request a communication session from the first mobile communication network or the second mobile communication network.

12. The communication network arrangement according to any one of claims 1 to 11, wherein the access management component is configured, if registering the mobile terminal in the first mobile communication network or providing a communication session to the mobile terminal via the first mobile communication network according to the request violates the quota, send a specification of a waiting period to the mobile terminal after which the mobile terminal may request to register in the first mobile communication network or may request a communication session from the first mobile communication network.

13. A method for managing mobile communication network access comprising:
receiving a request to register a mobile terminal in a first mobile communication network or to provide a communication session to the mobile terminal via the first mobile communication network;
determining whether registering the mobile terminal in the first mobile communication network or providing a communication session to the mobile terminal via the first mobile communication network according to the request violates a quota;
rejecting the request if registering the mobile terminal in the first mobile communication network or providing a communication session to the mobile terminal via the first mobile communication network according to the request violates the quota and
providing information to the mobile terminal about whether the mobile terminal may register with a second mobile communication network or the second mobile communication network may provide a communication session to the mobile terminal according to the request.

14. A mobile terminal comprising:
a transmitter configured to transmit a first request to register the mobile terminal in a first mobile communication network or to provide a communication session to the mobile terminal via the first mobile communication network;
a receiver configured to receive a rejection of the request and information to the mobile terminal about the cause of rejection that the quota has been reached, and/or whether the mobile terminal may register with a second mobile communication network or the second mobile communication network may provide a communication session to the mobile terminal according to the first request; and
a controller configured to control the transmitter to transmit a second request to register the mobile terminal in the second mobile communication network or to provide a communication session to the mobile terminal via the second mobile communication network according to the first request if the information specifies that the mobile terminal may register with the second mobile communication network or the second mobile communication network may provide a communication session to the mobile terminal according to the first request;
and to
avoid, at least during a waiting period, transmitting the second request to register the mobile terminal in the first mobile communication network and/or the second mobile communication network or to provide a communication session to the mobile terminal via the first mobile communication network and/or the second mobile communication network according to the first request if the information specifies that the mobile terminal may not register with the first mobile communication network and/or the second mobile communication network or the first mobile communication network and/or the second mobile communication network may not provide a communication session to the mobile terminal according to the first request.

15. A method for accessing a mobile communication network comprising:
transmitting a first request to register the mobile terminal in a first mobile communication network or to provide a communication session to the mobile terminal via the first mobile communication network;
receiving a rejection of the request and information to the mobile terminal about whether the mobile terminal may register with a second mobile communication network or the second mobile communication network may provide a communication session to the mobile terminal according to the first request;
transmitting a second request to register the mobile terminal in the second mobile communication network or to provide a communication session to the mobile terminal via the second mobile communication network according to the first request if the information specifies that the mobile terminal may register with the second mobile communication network or the second mobile communication network may provide a communication session to the mobile terminal according to the first request; and
avoiding, at least during a waiting period, transmitting the second request to register the mobile terminal in the second mobile communication network or to provide a communication session to the mobile terminal via the second mobile communication network according to the first request if the information specifies that the mobile terminal may not register with the second mobile communication network or the second mobile communication network may not provide a communication session to the mobile terminal according to the first request.
